# NOUVEAU FASCICULE DE BREVET EUROPEEN

(11) **EP 2 439 114 B2**
(45) Date de publication et mention de la décision concernant l'opposition: **13.09.2017**
(45) Mention de la délivrance du brevet: 19.02.2014
(21) Numéro de dépôt: 10013417.0
(22) Date de dépôt: 07.10.2010
(51) Int. Cl.: B60R 25/02

(54) **Antivol électrique pour le blocage/déblocage d'une colonne de direction**
Elektrische Diebstahlsicherung zum Verriegeln/Entriegeln einer Lenksäule
Electric anti-theft system for locking/unlocking a steering column

(43) Date de publication de la demande: 11.04.2012
(73) Titulaire: U-Shin Deutschland Zugangssysteme GmbH, 85253 Erdweg (DE)
(72) Inventeur: Laval, Anthony, 85253 Erdweg (DE); Lejeune, Nicolas, 85253 Erdweg (DE); Grenouillat, Régis, 85253 Erdweg (DE)
(74) Mandataire: Gaillarde, Frédéric F. Ch.

(56) Documents cités:
- EP-A1- 1 410 962
- EP-A1- 2 045 150
- EP-A2- 2 025 567
- DE-A1-102007 034 481
- GB-A- 2 459 042

## Description

L'invention concerne un antivol électrique pour le blocage/déblocage d'une colonne de direction dans des véhicules automobiles. L'invention s'applique en particulier à la fixation, ou au verrouillage, du pêne dans ses deux positions de blocage/déblocage de la colonne de direction.

Les antivols de blocage de colonne de direction ont pour but principal la fixation de la colonne de direction dans une position donnée lorsque notamment le moteur du véhicule s'arrête ou que la clé de contact a été retirée du barillet de démarrage. Dans ce cas, le pêne du antivol de blocage vient bloquer la colonne de direction, généralement en faisant saillie dans une partie de ladite colonne, de manière à empêcher toute tentative de déplacement du véhicule, en particulier pour son vol.

D'autre part, lorsque le véhicule est démarré, et à fortiori lorsqu'il roule, il est impératif que le antivol de blocage reste passif, c'est-à-dire qu'il ne vienne pas bloquer la colonne de direction, pour des raisons évidentes de sécurité.

Ainsi, il est impératif que les deux positions de blocage et de déblocage de la colonne de direction par le pêne, ou analogue, soient inviolables, tant pour lutter contre le vol du véhicule que pour éviter tout risque d'accident.

A l'heure actuelle, il existe sur le marché des antivols électriques de blocage/déblocage complexes disposant d'actionneurs électriques dédiés et/ou d'appareils distincts pour assurer le verrouillage du pêne dans ses deux positions de blocage et de déblocage de la colonne de direction. Ces systèmes sont coûteux, volumineux et sujets à des dysfonctionnements du fait même de leur complexité et du nombre d'éléments nécessaires à leur actionnement. Un antivol selon l'état de la technique est décrit dans le document EP 1410962A.

La présente invention entend remédier aux inconvénients des antivols de l'art antérieur en proposant une solution peu coûteuse, peu volumineuse, simple et fiable pour assurer automatiquement le verrouillage du pêne dans ses deux positions extrêmes dans des antivols électriques de blocage/déblocage de la colonne de direction.

A cet effet l'invention a pour objet un antivol électrique pour le blocage/déblocage d'une colonne de direction conforme à celui revendiqué en revendication 1.

L'invention est décrite ci-après plus en détail, à l'aide de figures ne représentant que des modes préférés de l'invention.
- Les figures 1 et 2 sont des vues partielles de côté et en perspective d'un antivol selon un mode préféré de réalisation de l'invention, en position de libération de colonne de direction, pêne verrouillé.

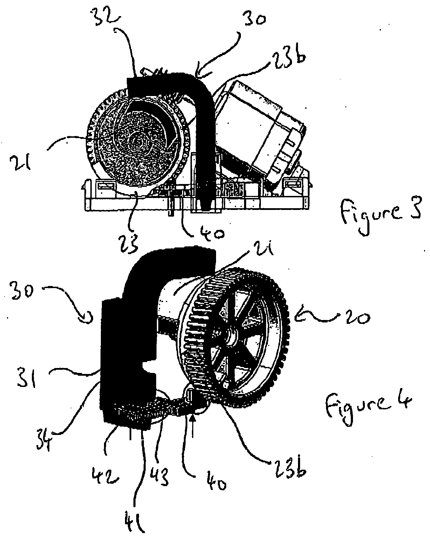

- Les figures 3 et 4 sont des vues partielles de côté et en perspective d'un antivol selon l'invention en position de libération de colonne de direction, pêne déverrouillé.
- Les figures 5 et 6 sont des vues partielles de côté et en perspective d'un antivol selon l'invention en position de blocage de colonne de direction, pêne déverrouillé.
- Les figures 7 et 8 sont des vues partielles de côté et en perspective d'un antivol selon l'invention en position de blocage de colonne de direction, pêne verrouillé.
- Les figures 9, 10 et 11 illustrent les positionnements respectifs d'un pêne, d'un verrou de pêne et d'un organe d'interposition dans une situation de verrouillage du pêne par le verrou de pêne mais sans activation de l'organe d'interposition.
- Les figures 12 et 13 illustrent une activation de l'organe d'interposition en cas d'attaque physique d'un antivol selon l'invention.

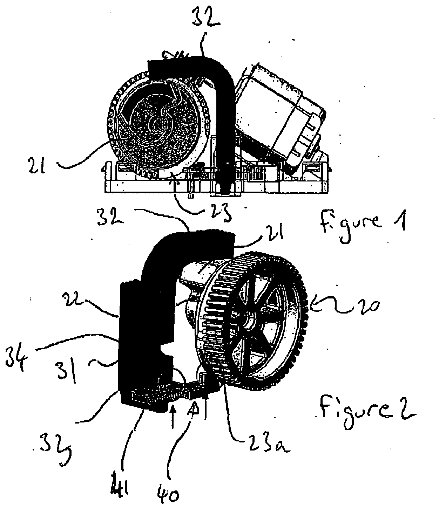

Sur les vues en de côté et en perspective des figures 1 et 2 est représenté partiellement un antivol comprenant un moteur électrique dont l'arbre de sortie est équipé d'une vis sans fin, une roue dentée 20 entrainée par la vis sans fin, et un pêne 30.

Dans le présent mode de réalisation, le pêne 30 présente une forme de L inversé, dont une barre 31 s'étend en direction d'une colonne de direction non représentée, et dont l'autre barre 32 vient coopérer avec une came 21 de la roue dentée 20 ménagée en surépaisseur de la roue 20, mais qui peut également être une pièce séparée de cette dernière tout en étant entrainée par elle.

La came 21 présente un profil tel que le pêne, au cours de la rotation de la roue 20, se voit coopérer avec une zone de la came 21 qui s'éloigne du centre de rotation de la roue 20, de sorte que le pêne s'extrait de la colonne de direction.

La roue 20 forme également une surépaisseur latérale présentant un profil circonférentiel 23 d'altitude radiale variable de sorte qu'un point d'appui sur ce profil se trouve à une distance radiale de l'axe de rotation de la roue qui varie selon le point d'appui considéré sur ce profil.

Ainsi, le profil 23 se divise ici en deux sections 23a et 23b d'altitude radiale respectivement élevée et faible.

Une navette 40 est également prévue dans ce mode de réalisation laquelle est montée en coulissement selon une direction de rapprochement du pêne et en appui sur le profil d'altitude variable 23. La navette vient en appui contre le profil 23 par une extrémité de cette dernière laquelle forme alors un suiveur circulant le long du profil d'altitude variable 23. En alternative, un tel suiveur peut être formé par une pièce distincte de la navette 40, laquelle pièce distincte actionne à son tour la navette 40.

La navette présente un corps principal 41 longitudinal lequel vient border latéralement la branche 33 du pêne. La navette 40 forme également deux excroissances 42 et 43 émergeant vers le pêne 30 de manière à pénétrer dans ce dernier lorsque positionnées à son niveau par le coulissement de la navette.

Aux fins de cette pénétration des excroissances 42 et 43 dans le pêne ce dernier présente un couple d'encoches 33 et 34 situées à deux degrés différents de ce dernier selon sa direction de déplacement vers la colonne de direction.

Le pêne 30 et la navette 40 étant tous deux en coopération permanente avec des portions de la roue 20 aptes à déplacer ce derniers selon leur direction de coulissement respectives et ici transversales l'une à l'autre, le pêne et la navette vont prendre des positions respectives changeantes et générer ainsi des configurations multiples de l'antivol que nous décrirons maintenant.

La navette constituera à cet effet un verrou qui s'opposera à un déplacement du pêne dans les positions décrites.

Dans la configuration des figures 1 et 2, le pêne 30 coopère par sa branche de commande 32 avec une portion la plus épaisse radialement de la came 21, de sorte que le pêne est dans sa position de libération de la colonne de direction, et présente alors son encoche 33 la plus distale de la branche de blocage 31 du pêne, en vis-à-vis de la navette 40.

La navette se trouve quant à elle en appui sur la section 23a d'altitude radiale élevée du profil 23. La navette 40 se trouve alors dans sa position la plus éloignée de la roue 20 et la plus proche du pêne 30, de sorte qu'elle pénètre dans le pêne 30 par introduction de l'excroissance latérale 32 à l'intérieur de l'encoche 33.

Après une première phase de rotation de la roue 20, la came 21 présente toujours à la branche de commande 32 du pêne une surface radialement épaisse de sorte que le pêne est maintenu en position de libération de la colonne de direction.

Par contre, la navette 40 est maintenant en appui sur le profil circonférentiel 23 au niveau de la section 23b d'altitude faible. La navette se trouve alors en position de coulissement où les excroissances 42 et 43 se trouvent de part et d'autre de la branche de blocage 31 sans qu'aucune d'elles ne pénètre dans le pêne. En d'autres termes la branche de blocage 32 du pêne est libre de circuler dans une encoche formée entre les deux excroissances 42 et 43.

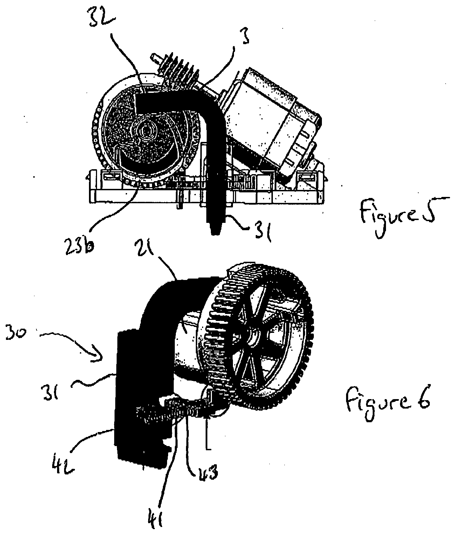

Après une seconde phase de rotation de la roue 20 et tel que représenté sur les figures 5 et 6, la branche de commande 32 du pêne 30 se trouve plus proche du centre de la roue 20 par effacement de la came 21 et la branche de blocage 31 du pêne, maintenant en blocage de la colonne de direction, présente son encoche la plus proximale en vis-à-vis de la navette 40.

La section d'altitude faible 23b du profil 23 présente ici une étendue suffisante pour que le pêne atteigne sa position final de blocage alors que la navette est toujours en appui sur la surface d'altitude faible 23b. En alternative, la navette 40 peut quitter la portion d'altitude faible 23b et venir en appui contre un flanc de la branche de blocage 31 du pêne avant que ce dernier n'atteigne sa position de blocage.

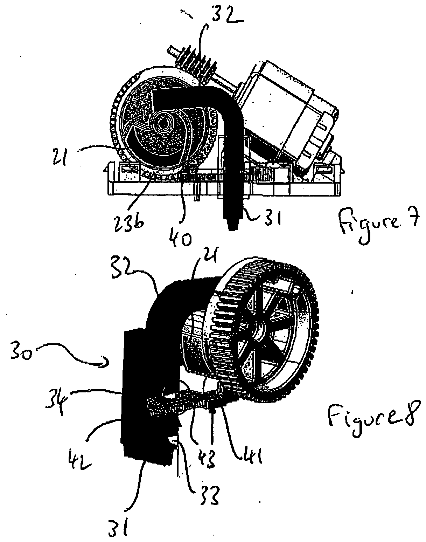

La roue 20 décrit enfin une dernière phase de rotation en sens horaire pour atteindre la configuration des figures 7 et 8. Dans cette configuration, la navette a quitté la section d'altitude faible et vient en butée dans sa position la plus rapprochée de la roue 20. L'excroissance la plus distale 42 de la navette pénètre alors dans l'encoche la plus proximale de la branche de blocage 31 du pêne et empêche alors tout déplacement du pêne en déblocage de la colonne de direction, notamment par intrusion d'un outil dans l'antivol ou par action sur l'extrémité du pêne 30.

Le verrou de pêne est donc ici formé par une seule pièce. Le verrou est en outre conformé comme une navette montée en coulissement. En alternative, le verrou peut être constitué d'une pièce basculante en rotation autour d'un axe qui peut être parallèle à la direction de déplacement ou autour d'un axe transversal à la direction de déplacement du pêne.

On comprend donc que le pêne est verrouillé dans chacune de ses deux positions de blocage et de libération par une même pièce laquelle est ici déplacée dans deux sens opposés pour atteindre chacune de deux positions de verrouillage distinctes l'une de l'autre.

Afin de sécuriser encore le verrouillage du pêne 30 dans sa position de blocage, on prévoit un élément voué à s'interposer sur le trajet de retour de la navette 40 depuis sa position représentée aux figures 7 et 8 et l'empêchant ainsi de quitter sa position de verrouillage du pêne, notamment lors de l'introduction frauduleuse d'un outil tel qu'un tournevis au sein de l'antivol.

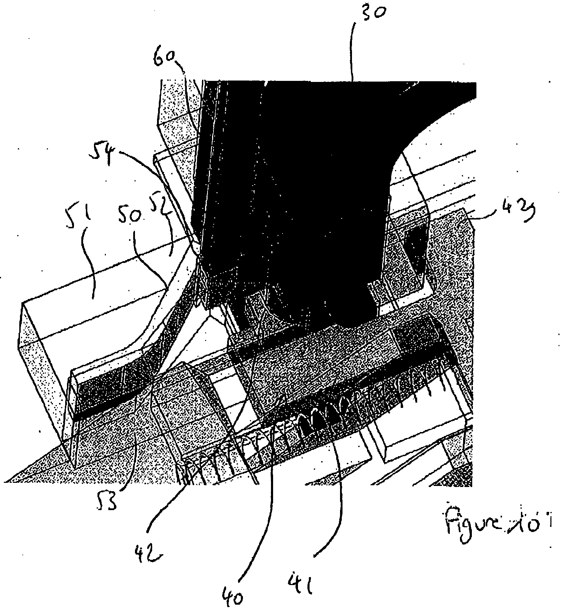

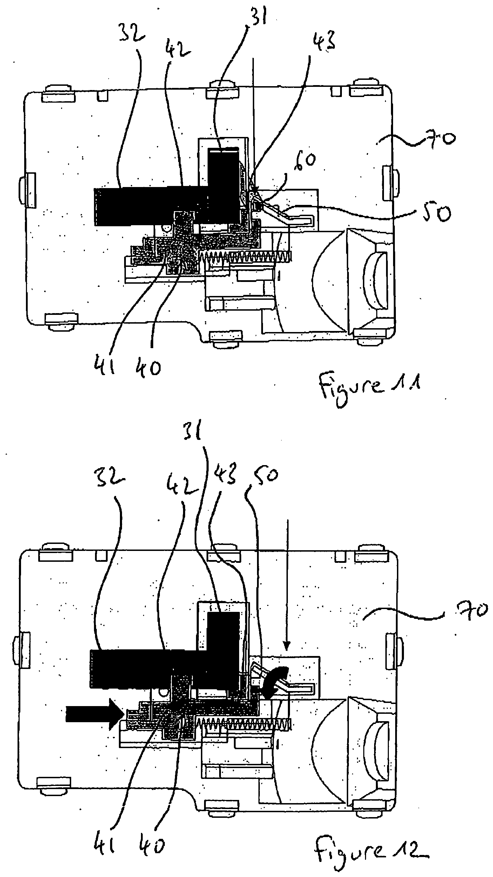

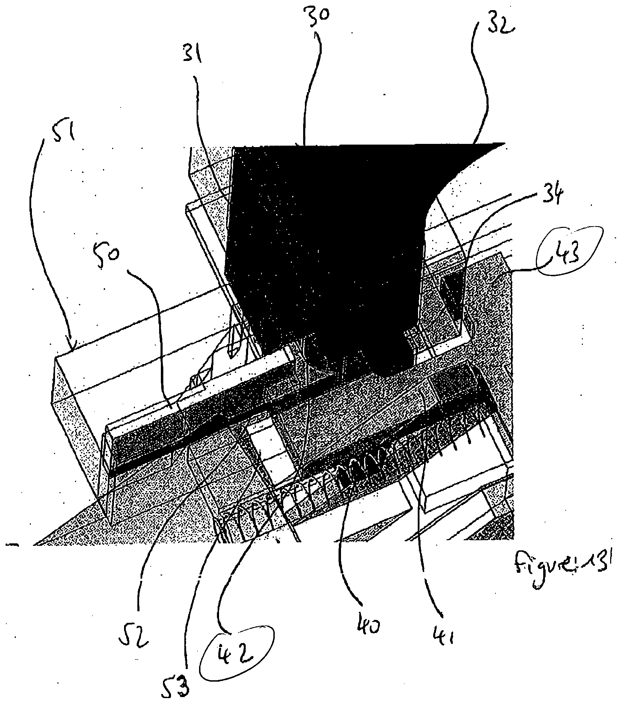

Pour cela l'antivol comprend une lame flexible 50 représentée aux figures 10 à 13, ici réalisée en métal, fléchie en effacement latéral à la navette, mais libérée en rapprochement de la navette en cas d'intrusion frauduleuse dans l'antivol.

La lame flexible, retrouve alors sa forme de repos et s'interpose sur le trajet d'au moins une portion de la navette 40.

Dans le présent exemple, la lame flexible 50 est positionnée à proximité de l'excroissance latérale la plus distale 42 du pêne laquelle verrouille le pêne en position de blocage de la colonne de direction. De la sorte, la lame une fois libérée présente son extrémité en vis-à-vis de cette excroissance, empêchant ainsi cette dernière d'être extraite de l'encoche correspondante du pêne. La lame 50 étant orientée en interposition dans une direction sensiblement parallèle à la direction de coulissement de la navette 40, la lame 50 peut exercer une résistance mécanique particulièrement élevée malgré les faibles dimensions de la lame 50. L'emploi d'une lame 50 de petite taille s'avère alors suffisant pour empêcher l'extraction de la navette 40 hors du péne et la petite taille de la lame 50 rend celle-ci particulièrement inaccessible et donc difficilement neutralisable frauduleusement.

Pour améliorer encore la robustesse et l'inviolabilité de la lame 50, on prévoit un boitier 51 formant une cavité interne bordée par deux plateaux 52 et 53 recouvrant deux arêtes longitudinales de la lame 50 laquelle cavité est ouverte en direction de la navette 40 afin de permettre à la lame 50 d'atteindre la navette par cette portion ouverte.

En fonctionnement normal de l'antivol, la lame 50 est maintenue effacée en permanence par rapport à la navette 40 par la présence d'un doigt de maintien 60.

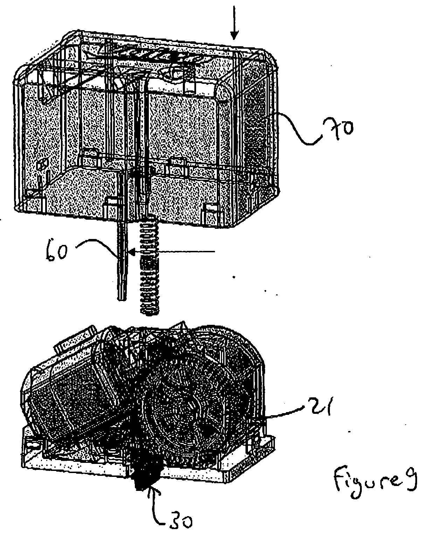

Le doigt de maintien 60 s'étend parallèlement à la direction de déplacement du pêne 30, traverse un plateau 52 du boîtier 51 et est maintenu transversalement par une fenêtre 54 du plateau 52 par laquelle le doigt 60 traverse ce plateau. Le doigt 60 vient par son extrémité former une surface d'appui pour la lame 50. Le doigt de maintien 60 vient, par son extrémité opposée, prendre appui sur une face interne d'un coque de protection 70 de l'antivol représentée à la figure 9.

Le doigt 60 forme à cette extrémité un retour vers le centre de l'antivol ayant la forme d'un pion autour duquel s'enroule un ressort hélicoïdal agissant sur le doigt en appui contre la coque 70.

Lorsque la coque 70 est désolidarisée frauduleusement de l'antivol ou endommagée, le doigt 60 se déplace en éloignement de la lame 50 et libère celle-ci qui vient alors s'interposer sur le trajet de retour de la navette 40.

Le doigt 60 présente donc, grâce à sa mise en appui contre la face intérieure de la coque, un positionnement indexé sur le positionnement d'au moins une partie de la coque de protection. En alternative, le doigt 60 peut avoir un positionnement indexé sur la position d'au moins une partie de la coque par solidarisation du doigt 60 avec la coque, ou encore réalisation de ce dernier de manière monobloc avec la coque.

On notera que la lame 50 ainsi libérée peut venir en appui contre la navette 40 alors que cette dernière n'est pas en position de verrouillage du pêne 30. C'est notamment le cas lorsque le pêne 30 est en appui accidentel contre une bordure d'une cavité de réception de la colonne de direction bien que la came 21 soit dans une position où elle l'autorise à se déplacer dans la colonne.

Dans cette configuration, le pêne 30 est en attente par appui élastique de pénétrer dans la colonne, la navette 40 est elle-même en attente par appui élastique de pénétrer dans l'encoche 34 du pêne, et la lame 50 est en appui latéral contre l'excroissance latérale 42 de la navette, la lame 50 étant alors elle-même en attente de venir s'interposer contre l'excroissance distale 42 de la navette.

Il suffit dans cette situation d'un léger actionnement du volant du véhicule au cours d'une attaque frauduleuse pour que le pêne 30, la navette 40 puis la lame 50 viennent successivement et définitivement bloquer l'antivol en configuration de blocage de la colonne de direction.

Bien entendu, on pourra apporter à l'invention de nombreuses modifications sans sortir du cadre de celle-ci.

## Revendications

1. Antivol électrique pour le blocage/déblocage d'une colonne de direction, comprenant un pêne (30) destiné à occuper une position de blocage de la colonne de direction et une position de libération de la colonne de direction, un moteur commandant le déplacement du pêne dans les deux susdites positions de blocage et de libération, et un verrou (40) prenant une position de verrouillage dans laquelle il maintient le pêne (30) dans sa position de blocage de la colonne de direction, **caractérisé en ce qu'**il comprend un organe d'interposition (50) libérable en réponse à un attaque physique de l'antivol électrique pour s'interposer sur un trajet du verrou de pêne (40) et empêcher celui-ci de quitter sa position de verrouillage et **en ce que** le verrou (40) comprend une navette configurée pour coulisser entre une position dans laquelle elle engage le pêne (30, 31) et une position dans laquelle elle est effacée par rapport au trajet du pêne (30, 31).

2. Antivol selon la revendication 1, **caractérisé en ce que** l'organe d'interposition (50) est constitué par un élément élastique positionné pour venir faire interposition au verrou de pêne (40) sous l'effet de sa propre élasticité.

3. Antivol selon la revendication 1 ou la revendication 2, **caractérisé en ce qu'**il comprend une coque de protection (70), l'organe d'interposition (50) est rappelé élastiquement vers sa position de interposition et l'antivol comprend un organe mobile de retenue (60) retenant l'organe d'interposition (50) hors de sa position d'interposition, lequel organe de retenue (60) présente un positionnement indexé sur le positionnement d'au moins une partie de la coque de protection (70).

4. Antivol selon la revendication précédente, **caractérisé en ce que** l'organe de retenue (60) est rappelé élastiquement contre la coque de protection (70) et est configuré pour s'effacer devant l'organe d'interposition (50) lorsque la coque (70) est déplacée.

5. Antivol selon la revendication précédente, **caractérisé en ce que** l'organe de retenue (60) est une tige mobile longitudinalement et l'élément d'interposition (50) est positionné pour se trouver respectivement en appui latéral sur une extrémité de la tige (60) et au-delà de l'extrémité de la tige (60) selon que la coque de protection (70) est intègre ou attaquée.

6. Antivol selon l'une quelconque des revendication précédentes, **caractérisé en ce que** l'organe d'interposition (50) est une lame flexible.

7. Antivol selon la revendication précédente, **caractérisé en ce que** l'organe d'interposition (50) est une lame flexible laquelle est configurée pour s'interposer sur le trajet du verrou (40) en contactant le verrou par l'extrémité libre de la lame flexible.

8. Antivol selon l'une quelconque des revendications précédentes, **caractérisé en ce qu'**il comporte une roue de commande (20) portant un profil rotatif (23, 23a, 23b) d'altitude radiale variable, et la navette (40) est associée à un suiveur placé en appui contre ledit profil rotatif d'altitude radiale variable (23, 23a, 23b) de sorte que la navette (40) se trouve en position de verrouillage ou de déverrouillage du pêne (30, 31, 32) selon l'altitude radiale d'un emplacement du profil rotatif (23, 23a, 23b) où le suiveur est en appui.

9. Antivol selon l'une quelconque des revendications précédentes, **caractérisé en ce que** le suiveur est monobloc avec la navette (40).

## Patentansprüche

1. Elektrische Diebstahlsicherung zum Sperren/Entsperren einer Lenksäule, die einen Riegel (30) enthält, der dazu bestimmt ist, eine Sperrstellung der Lenksäule einzunehmen, wobei ein Motor die Verschiebung des Riegels in die zwei Stellungen der Sperrung und Freigabe steuert, und ein Bolzen (40) eine Verriegelungsstellung einnimmt, in der er den Riegel (30) in seiner Sperrstellung der Lenksäule hält, **dadurch gekennzeichnet, dass** sie ein Zwischenfügungsorgan (50) enthält, das als Reaktion auf einen physischen Angriff auf die elektrische Diebstahlsicherung freisetzbar ist, um sich auf einen Weg des Riegelbolzens (40) zwischenzufügen und diesen daran zu hindern, seine Verriegelungsstellung zu verlassen und dadurch, dass der Bolzen (40) einen Umschalter umfasst, der konfiguriert ist, um zwischen einer Position, in der er in den Riegel (30, 31) eingreift, und einer Position zu gleiten, in der er im Verhältnis zum Weg des Riegels (30, 31) zurückgewichen ist.

2. Diebstahlsicherung nach Anspruch 1, **dadurch gekennzeichnet, dass** das Zwischenfügungsorgan (50) aus einem elastischen Element besteht, das positioniert ist, um sich unter Wirkung seiner eigenen Elastizität am Riegelbolzen (40) zwischenzufügen.

3. Diebstahlsicherung nach Anspruch 1 oder Anspruch 2, **dadurch gekennzeichnet, dass** sie eine Schutzschale (70) enthält, wobei das Zwischenfügungsorgan (50) elastisch in seine Zwischenfügungsstellung zurückgesetzt wird, und die Diebstahlsicherung ein bewegliches Rückhalteorgan (60) enthält, das das Zwischenfügungsorgan (50) außerhalb seiner Zwischenfügungsstellung hält, wobei das Rückhalteorgan (60) eine auf die Positionierung mindestens eines Teils der Schutzschale (70) indizierte Positionierung aufweist.

4. Diebstahlsicherung nach dem vorhergehenden Anspruch, **dadurch gekennzeichnet, dass** das Rückhalteorgan (60) elastisch gegen die Schutzschale (70) zurückgesetzt wird, und konfiguriert ist, um vor dem Zwischenfügungsorgan (50) zurückzuweichen, wenn die Schale (70) verschoben wird.

5. Diebstahlsicherung nach dem vorhergehenden Anspruch, **dadurch gekennzeichnet, dass** das Rückhalteorgan (60) eine in Längsrichtung bewegliche Stange ist, und das Zwischenfügungselement (50) positioniert wird, um sich in seitlicher Auflage auf einem Ende der Stange (60) bzw. jenseits des Endes der Stange (60) zu befinden, je nachdem, ob die Schutzschale (70) unbeschädigt oder angegriffen ist.

6. Diebstahlsicherung nach einem der vorhergehenden Ansprüche, **dadurch gekennzeichnet, dass** das Zwischenfügungsorgan (50) eine flexible Lamelle ist.

7. Diebstahlsicherung nach dem vorhergehenden Anspruch, **dadurch gekennzeichnet, dass** das Zwischenfügungsorgan (50) eine flexible Lamelle ist, die konfiguriert ist, um sich auf den Weg des Bolzens (40) zwischenzufügen, indem sie den Bolzen durch das freie Ende der flexiblen Lamelle kontaktiert.

8. Diebstahlsicherung nach einem der vorhergehenden Ansprüche, **dadurch gekennzeichnet, dass** sie ein Steuerrad (20) aufweist, das ein drehbares Profil (23, 23a, 23b) variabler radialer Höhe trägt, und der Umschalter (40) einer Nachführeinrichtung zugeordnet ist, die in Auflage gegen das drehbare Profil variabler radialer Höhe (23, 23a, 23b) angeordnet ist, so dass der Umschalter (40) sich in der Verriegelungsstellung oder Entriegelungsstellung des Riegels (30, 31, 32) befindet, je nach der radialen Höhe einer Stelle des drehbaren Profils (23, 23a, 23b), an der die Nachführeinrichtung in Auflage ist.

9. Diebstahlsicherung nach einem der vorhergehenden Ansprüche, **dadurch gekennzeichnet, dass** die Nachführeinrichtung aus einem Stücke mit dem Umschalter (40) besteht.

## Claims

1. An electric antitheft device for locking/unlocking a steering column, including a bolt (30) adapted to occupy a position locking the steering column and a position releasing the steering column, a motor driving the movement of the bolt into said locking and releasing positions, and a lock (40) assuming a locking position in which it retains the bolt (30) in its position locking the steering column, **characterized in that** it includes an interposition member (50) releasable in response to a physical attack on the electric antitheft device so as to be interposed into the path of the bolt lock (40) and prevent the latter from leaving its locking position and **in that** the bolt (40) includes a shuttle member configured to slide between a position in which it engages the bolt (30, 31) and a position in which it is retracted with respect to the path of the bolt (30, 31).

2. The antitheft device according to claim 1, **characterized in that** the interposition member (50) consists of an elastic element positioned to be interposed with the bolt lock (40) by virtue of its own elasticity.

3. The antitheft device according to claim 1 or claim 2, **characterized in that** it includes a protective shell (70), the interposition member (50) is urged elastically toward its interposed position and the antitheft device includes a mobile retaining member (60) holding the interposition member (50) out of its interposed position, which retaining member (60) has a position indexed to the position of at least part of the protective shell (70).

4. The antitheft device according to the preceding claim, **characterized in that** the retaining member (60) is urged elastically against the protective shell (70) and is configured to retract in front of the interposition member (50) if the shell is moved.

5. The antitheft device according to the preceding claim, **characterized in that** the retaining member (60) is a longitudinally mobile rod and the interposition member (50) is positioned so as to bear laterally on one end of the rod (60) and beyond the end of the rod (60) according to whether the protective shell (70) is intact or attacked, respectively.

6. The antitheft device according to any one of the preceding claims, **characterized in that** the interposition member (50) is a flexible blade.

7. The antitheft device according to the preceding claim, **characterized in that** the interposition member (50) is a flexible blade that is configured to be interposed into the path of the bolt (40) with the free end of the flexible blade in contact with the bolt.

8. The antitheft device according to any one of the preceding claims, **characterized in that** it includes a driving wheel (20) bearing a rotary profile (23, 23a, 23b) of varying radial height, and the shuttle member (40) is associated with a follower bearing against said rotary profile (23, 23a, 23b) of varying radial height so that the shuttle member (40) is in the position for locking or unlocking the bolt (30, 31, 32) according to the radial height of a location on the rotary profile (23, 23a, 23b) on which the follower bears.

9. The antitheft device according to any one of the preceding claims, **characterized in that** the follower is in one piece with the shuttle member (40).
